# EUROPEAN PATENT SPECIFICATION

(11) **EP 3 521 784 B1**
(45) Date of publication and mention of the grant of the patent: **08.03.2023**
(21) Application number: 18154555.9
(22) Date of filing: 31.01.2018
(51) Int. Cl.: G01J 3/453, G01J 3/02, G02B 26/06

(54) **SCANNING INTERFEROMETER WITH HELICOIDAL PRISM**
SCANNING INTERFEROMETER MIT HELIXPRISMA
INTERFEROMETRE A BALAYAGE AVEC PRISM HELICOIDAL

(43) Date of publication of application: 07.08.2019
(73) Proprietor: Tõnnisson, Teofilus, 61602 Töravere (EE)
(72) Inventor: Tõnnisson, Teofilus, 61602 Töravere (EE)
(74) Representative: Sarap, Margus

(56) References cited:
- WO-A1-81/00299
- US-A- 5 262 889
- US-A- 5 491 524
- US-B2- 9 696 136

## Description

### Technical Field

This invention concerns scanning interferometers intended for use in Fourier spectrometers where an interferogram is refractively scanned with the help of pair of two helicoidal prisms installed in such a way that the arms of both interferometers pass through the similar helicoidal prisms, and one helicoidal prism can be rotated around its axis, the plane of which is parallel to the plane formed by the optical axes of the interferometer, that way increasing or decreasing the optical path in one arm of the interferometer and achieving scanning of the interferogram.

### Background Art

The scanning interferometer consisting of two mutually perpendicular flat mirrors, one of which can move along an axis that is perpendicular to its plane, has been used as the scanning unit and is known as the Michelson interferometer (P. R. GrifFiths, J. A. de Haseth. Fourier transform infrared spectroscopy, Wiley&Sons, New York, 1986, p.1). Interferometer uses a beamsplitter-compensator pair for the division of light into two parts, and two plane mirrors for reflecting the light back to the beamsplitter. Scanning of the interferogram is achieved by moving one mirror in alternating directions along the axis which is perpendicular to its plane.

Scanning of the interferogram is also possible by the wedge-shaped prism (wedge prism) movable across one arm of the interferometer to cause scanning. The interferometer uses a beamsplitter-compensator pair for the division of light into two parts, has stationary reflectors at the end of each interferometer arms, stationary wedge prism (compensating prism) in one arm and movable wedge prism across the other arm (Refractively scanned interferometer, W.L. Clarke, US Patent 4,286,877, 1981; see also PCT Publication Number WO 81/00299). To and for movement across the interferometer arm creates an optical path difference in one arm, which brings about the possibility for the scanning of the interferogram.

In the interferometers described above, the path difference is scanned with the help of linear motion of the scanning unit (wedge prism) in alternating directions, whereas the scanning unit is located in one arm of the interferometer. This type of constant linear movement backward and forward does not allow to achieve high speed of scanning of the interferogram as the moving element (wedge prism) is to be to start from zero speed, then accelerate to the required speed, then make constant speed movement until the required spectral resolution, then to decelerate speed to zero, then turn the movement direction around and start again.

### Summary of invention

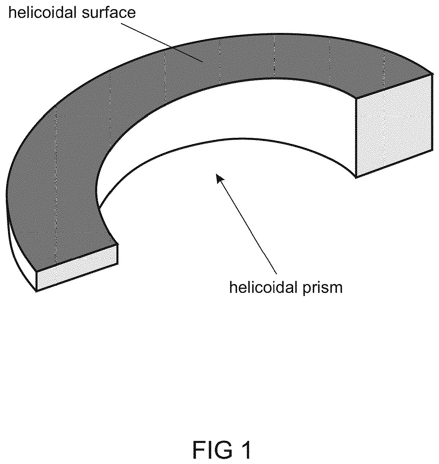

The aim of this invention is to increase speed of scanning of the interferogram due to specific scanning unit, wedge-shaped helicoidal prism (helicoidal prism) located in one arm of the interferometer and having the opportunity to rotate around the axis, parallel to the plane formed by the optical axes of the interferometer. The helicoidal prism formed by flat surface and helicoidal [1], [2] surface (Fig. 1) placed in such a way into one arm of the interferometer capable to make rotating motion in one directions around its axis of movement which is parallel to the plane formed by the optical axes of the interferometer. The references [1] and [2] are incorporated herewith into description to characterize the helicoidal surface which can be as a straight helicoidal surface or an oblique helicoidal surface. Stationary helicoidal prism (compensating prism) is placed in other arm of the interferometer. In case of the invention presented, both arms of the interferometer pass through the similar helicoidal prisms, whereas the scanning of the interferogram is achieved through the rotating motion of the scanning helicoidal prism around the axis of movement, whereas the change in the optical path occurs in such a way that when the optical path refractively increases in one arm of the interferometer, the optical path in the other arm remains constant at the same time. This invention makes it possible to increase the speed of scanning of the interferogram as the scanning helicoidal prism is capable to rotate with high speed in one direction around the axis of movement.

### Brief description of drawings

Fig. 1 shows a helicoidal prism of the scanning unit of the scanning interferometer according to present invention,
Fig. 2 shows an optical scheme of a scanning interferometer with a scanning unit comprising a helicoidal prism having a shallow angle between its input and output surfaces.

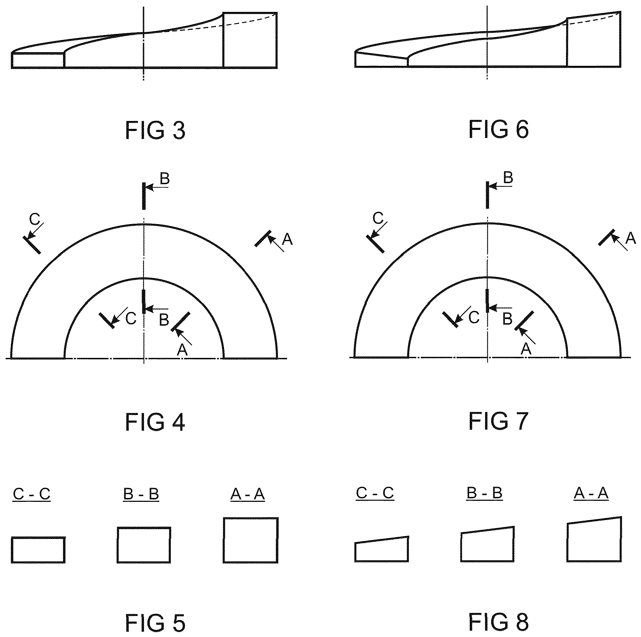

Fig. 3 shows a helicoidal prism with a straight helicoidal surface used in the interferometer according to the present invention,
Fig. 4 shows top view of the helicoidal prism and fig. 5 shows cross sections of the helicoidal prism taken in lines A-A, B-B and C-C.
Fig. 6 shows a helicoidal prism with an oblique helicoidal surface used in the interferometer according to the present invention,
Fig. 7 shows top view of the helicoidal prism and fig. 8 shows cross sections of the helicoidal prism taken in lines A-A, B-B and C-C.

### Description of embodiments

The interferometer includes a light source 10 for generating a beam of light, a beamsplitter-compensator pair 11 for splitting the beam of light into two beams, two stationary reflectors 12 and 13 located respectively at the ends of the two interferometer arms 14 and 15 to reflect the splitted by beamsplitter radiation beams back to the beamsplitter-compensator pair 11, a detector 16 and a movable helicoidal prism 17 which rotates across the path of beam of one arm of interferometer 15 to cause refractive scanning of the interferogram.

The stationary reflectors 12 and 13 are retro-reflectors as "corner cube" reflector, but other type of retro-reflector like "cats-eye" reflector may be used. Use of retro-reflectors reduces sensitivity to angular errors of the scanning wedge.

The stationary compensating helicoidal prism 18 is located at the same position with respect to its arm 14 of the interferometer as the position of the scanning movable helicoidal prism 17 with respect to its arm 15 of the interferometer. This means that the distance of stationary compensating helicoidal prism 18 from stationary reflector 12 should be the same as the distance of the movable helicoidal prism 17 from the stationary reflector 13 when the movable helicoidal prism 17 is in its centered position.

The light beam from the beamsplitter-compensator pair 11 of the arm 14 enters stationary compensating helicoidal prism 18 at right angles to the front flat surface of the compensating helicoidal prism 18 and therefore is not angularly deflected until it emerges from the rear helicoidal surface of the compensating helicoidal prism 18. The light beam from the beamsplitter-compensator pair 11 of the arm 15 enters and comes through the movable helicoidal prism 17 in the similar way as described regarding the beam through compensating helicoidal prism 18.

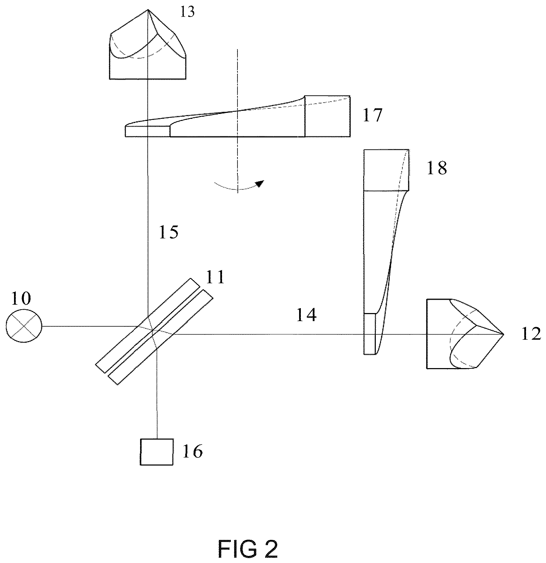

With reference to fig. 2, a collimated beam of radiation from light source 10 propagates to the beamsplitter-compensator pair 11 where it is divided into two beams which propagate separately through the movable helicoidal prism 17 and compensating helicoidal prism 18 to the stationary reflectors such as retro-reflective reflectors 12 and 13, respectively. As shown in the fig.2, in one embodiment the retro-reflective mirrors 12 and 13 are corner-cube reflectors. Alternatively the retro-reflective mirrors 12 and 13 are cats-eye retroreflectors. The effect of the corner-cube reflectors is to reflect the (radiation) light beams back to the beamsplitter-compensator pair 11 exactly parallel to the initial beams directions falling onto the reflectors. In this way the light beams in arms 14 and 15 of the interferometer propagate accordingly through the movable helicoidal prism 17 and stationary compensating helicoidal prism 18 twice and fall again to the beamsplitter-compensator pair 11. When the movable helicoidal prism 17 is rotating it produces refractively a difference in path length or retardation between the two interferometer arms 14 and 15. As long as the optical path lengths of two interferometer arms 14 and 15 are absolutely identical, a wavefront reaching the beamsplitter-compensator pair 11 along the return path of the interferometer arm 14 is coincident in space with a wavefront reaching the beamsplitter-compensator pair 11 along the return path of the other interferometer arm 15, with the result that the two wavefronts are recombined at the beamsplitter-compensator pair 11 in constructive interference. If the movable helicoidal prism 17 makes rotating movement in clockwise direction, the path length of the interferometric arm 15 becomes greater, the optical path difference thus established would cause the wavefront of the interferometer arm 15 having the greater optical path length to be retarded relatively to the wavefront from the interferometer arm 14. With the wavefronts out of phase, and in the extreme case of phase opposition two wavefronts are recombined at the beamsplitter-compensator pair 11 in destructive interference. To change the optical path difference between the two interferometer arms 14 and 15, it is merely a question of rotating the movable helicoidal prism 17 around its axis of rotation. When that is done, the optical path length of the interferometer arm 14 remains unchanged, but that of the interferometer arm 15 increases refractively creating in this way scanning of the interferogram.

### Reference signs list

10 - light source
11 - beamsplitter-compensator pair
12 - stationary reflector
13 - stationary reflector
14 - one interferometer arm
15 - other interferometer arm
16 - detector
17 - movable helicoidal prism
18 - stationary compensating helicoidal prism

### Citation list

1. S.N. Krivoshapko, V.N. Ivanov, "Encyclopedia of Analytical Surfaces", Springer International Publishing, Switzerland 2015, pages 225-258, pages 430-432
2. Helicoid. Encyclopedia of Mathematics, https://www.encyclopediaofmath.org/index.php/Helicoid

## Claims

1. A scanning interferometer comprising:
- a light source (10) generating a beam of light,
- a beamsplitter-compensator pair (11) splitting said beam of light into two partial beams, one of which is directed to one arm (14) of the interferometer and one of which is directed to the other arm (15) of the interferometer,
- two stationary reflectors (12, 13), respectively, in the arms (14, 15) of the interferometer reflecting the partial beams of light back to the beamsplitter-compensator pair (11),
- a scanning unit placed in one arm (15) of the interferometer where one partial beam of light of the arm (15) from the beamsplitter-compensator pair (11) propagates through the scanning unit to the stationary reflector (13) and back,
- a stationary compensating prism (18) placed in the other arm (14) of the interferometer where the other partial beam of light of the arm (14) from the beamsplitter-compensator pair (11) propagates through said stationary compensating prism (18) to the other stationary reflector (12) and back, and
- a detector (16) to receive said pair of partial beams of light, **characterised in that** the scanning unit comprises a movable helicoidal prism (17) having a shallow angle between its input and output surfaces, wherein one surface of the movable helicoidal prism (17) is flat and the other surface is helicoidal, and the movable helicoidal prism (17) is capable of rotating around its axis which is parallel to the optical axis of the arm of the interferometer, wherein the rotation of the scanning movable helicoidal prism (17) refractively increases or decreases the optical path in one interferometer arm when scanning of the interferogram takes place, and the stationary compensating prism (18) is a helicoidal prism having a shallow angle between its input and output surfaces, wherein one surface of the stationary compensating prism (18) is flat and the other surface is helicoidal.

2. The interferometer according to claim 1, **characterised in that** the stationary reflectors (12, 13) are corner-cube type mirrors which reflect a light beam fallen on them back along exactly the same optical axis along which the light beam fell on the reflector.

3. The interferometer according to claim 1, **characterised in that** the stationary reflectors (12, 13) are cats-eye type mirrors which reflect a light beam from a light source fallen on them back along exactly the same optical axis along which the light beam from the light source fell on the reflector.

4. The interferometer according to claims 1-3 **characterized in that** one surface of the helicoidal prism (17, 18) is flat and the other surface is a straight helicoidal surface or oblique helicoidal surface.

## Patentansprüche

1. Ein Interferometer mit Scan-Funktion, bestehend aus:
- einer Lichtquelle (10), die einen Lichtstrahl erzeugt,
- einem Strahlenteiler-Kompensatorpaar (11), welches den genannten Lichtstrahl in zwei Teilstrahlen teilt, wovon einer davon auf einen Arm (14) des Interferometers und der andere auf den anderen Arm (15) des Interferometers gerichtet ist,
- jeweils zwei stationären Reflektoren (12, 13) in den Armen (14, 15) des Interferometers, welche die Teilstrahlen zurück zum Strahlenteiler-Kompensatorpaar (11) reflektieren,
- einer Scan-Einheit in einem Arm (15) des Interferometers, in der sich ein Teillichtstrahl des Arms (15) vom Strahlenteiler-Kompensatorpaar (11) durch die Scan-Einheit zum stationären Reflektor (13) und zurück ausbreitet,
- einem stationären Kompensationsprisma (18) im anderen Arm (14) des Interferometers, in dem sich der andere Teillichtstrahl des Armes (14) vom Strahlenteiler-Kompensatorpaar (11) durch genanntes stationäres Kompensationsprisma (18) zum anderen stationären Reflektor (12) und zurück ausbreitet, und
- einem Detektor (16) zur Aufnahme der genannten Teillichtstrahlen,
**dadurch gekennzeichnet, dass**
die Scan-Einheit aus einem beweglichen, schraubenförmigen Prisma (17) mit leichtem Neigungswinkel zwischen Eingangs- und Ausgangsoberflächen besteht, wobei
eine Oberfläche des beweglichen, schraubenförmigen Prismas (17) flach und die andere Oberfläche schraubenförmig ist, und das bewegliche, schraubenförmige Prisma (17) sich um seine Achse drehen kann, die parallel zur optischen Achse des Interferometerarms verläuft, wobei
die Drehung des scannenden, beweglichen, schraubenförmigen Prismas (17) den optischen Pfad in einem Interferometerarm brechend erhöht oder verringert, wenn ein Scan-Vorgang des Interferogramms stattfindet, und
das stationäre Kompensationsprisma (18) ein schraubenförmiges Prisma ist, das einen leichten Neigungswinkel zwischen seinen Eingangs- und Ausgangsoberflächen aufweist, wobei eine Oberfläche des stationären Kompensationsprismas (18) flach und die andere Oberfläche schraubenförmig ist.

2. Das Interferometer nach Anspruch 1, **dadurch gekennzeichnet, dass** die stationären Reflektoren (12, 13) Eckwürfelspiegel sind, welche einen auf sie gefallenen Lichtstrahl entlang der gleichen optischen Achse zusammen mit dem auf den Reflektor gefallenen Lichtstrahl zurück reflektieren.

3. Das Interferometer nach Anspruch 1, **dadurch gekennzeichnet, dass** die stationären Reflektoren (12, 13) Katzenaugenspiegel sind, die einen Lichtstrahl von einer Lichtquelle, der auf sie gefallen ist, entlang der gleichen optischen Achse zusammen mit dem Lichtstrahl der Lichtquelle, die auf den Reflektor gefallen ist, zurück reflektieren.

4. Das Interferometer nach den Ansprüchen 1-3, **dadurch gekennzeichnet, dass** eine Oberfläche des schraubenförmigen Prismas (17, 18) flach und die andere Oberfläche eine gerade schraubenförmige Oberfläche oder schräge schraubenförmige Oberfläche ist.

## Revendications

1. Un interféromètre à balayage comprenant:
- d'une source de lumière (10) qui émet un faisceau de lumière,
- une paire diviseur-compensateur de faisceau (11) divisant ledit faisceau de lumière en deux faisceaux partiels, dont l'un est dirigé vers un bras (14) de l'interféromètre et dont l'un est dirigé vers l'autre bras (15) de l'interféromètre,
- deux réflecteurs fixes (12, 13), respectivement, dans les bras (14, 15) de l'interféromètre réfléchissant les faisceaux partiels de lumière vers la paire diviseur-compensateur de faisceaux (11),
- une unité de balayage placée dans un bras (15) de l'interféromètre où un faisceau partiel de lumière du bras (15) provenant de la paire diviseur-compensateur de faisceau (11) se propage à travers l'unité de balayage vers le réflecteur stationnaire (13) et inversement,
- un prisme de compensation stationnaire (18) placé dans l'autre bras (14) de l'interféromètre où l'autre faisceau partiel de lumière du bras (14) provenant de la paire diviseur-compensateur de faisceau (11) se propage à travers ledit prisme de compensation stationnaire (18) vers l'autre réflecteur stationnaire (12) et inversement, et
- un détecteur (16) pour recevoir ladite paire de faisceaux partiels de lumière,
**caractérisé en ce que**
l'unité de balayage comprend un prisme hélicoïdal mobile (17) présentant un angle faible entre ses surfaces d'entrée et de sortie, dans lequel
une surface du prisme hélicoïdal mobile (17) est plate et l'autre surface est hélicoïdale, et le prisme hélicoïdal mobile (17) est capable de tourner autour de son axe qui est parallèle à l'axe optique du bras de l'interféromètre, dans lequel :
la rotation du prisme hélicoïdal mobile de balayage (17) augmente ou diminue de manière réfractive le trajet optique dans un bras d'interféromètre lorsque le balayage de l'interférogramme a lieu, et
le prisme de compensation fixe (18) est un prisme hélicoïdal présentant un angle faible entre ses surfaces d'entrée et de sortie, une surface du prisme de compensation fixe (18) étant plate et l'autre surface étant hélicoïdale.

2. Interféromètre selon la revendication 1, **caractérisé en ce que** les réflecteurs fixes (12, 13) sont des miroirs de type à coin de cube qui réfléchissent un faisceau de lumière retombant sur eux exactement le long du même axe optique le long duquel le faisceau lumineux tombait sur le réflecteur.

3. Interféromètre selon la revendication 1, **caractérisé en ce que** les réflecteurs fixes (12, 13) sont des miroirs de type oeil-de-chat qui réfléchissent un faisceau de lumière provenant d'une source lumineuse tombée sur eux en retour le long exactement du même axe optique le long duquel le faisceau lumineux provenant de la source lumineuse est tombé sur le réflecteur.

4. Interféromètre selon les revendications 1 à 3, **caractérisé en ce qu'**une surface du prisme hélicoïdal (17, 18) est plate et l'autre surface est une surface hélicoïdale droite ou une surface hélicoïdale oblique.
